# EUROPEAN PATENT APPLICATION

(11) **EP 2 849 432 A1**
(43) Date of publication of application: **18.03.2015**
(21) Application number: 12876436.2
(22) Date of filing: 11.05.2012
(51) Int. Cl.: H04N 5/44

(54) **RELAY DEVICE**

(71) Applicant: Pioneer Digital Design and Manufacturing Corporation, Kanagawa 212-0031 (JP)
(72) Inventor: RIN, Yasuhiro, Kawasaki-shi Kanagawa 212-0031 (JP); ODA, Mamoru, Kawasaki-shi Kanagawa 212-0031 (JP); HASHIMOTO, Takeshi, Kawasaki-shi Kanagawa 212-0031 (JP); SHIMIZU, Yukitaka, Kawasaki-shi Kanagawa 212-0031 (JP); SAITOH, Satoshi, Kawasaki-shi Kanagawa 212-0031 (JP); KINOSHITA, Shinichiro, Kawasaki-shi Kanagawa 212-0031 (JP); NISHIGAKI, Tomoo, Kawasaki-shi Kanagawa 212-0031 (JP); HOSOKAWA, Akio, Kawasaki-shi Kanagawa 212-0031 (JP)
(74) Representative: Viering, Jentschura & Partner Patent- und Rechtsanwälte
(86) International application number: PCT/JP2012/062186
(87) International publication number: WO 2013/168287

(57) **Abstract**

A relay apparatus (10) is provided with a first signal transmitting device compliant with one standard, a second signal transmitting device compliant with another standard, a first obtaining device, a second obtaining device, a generating device and a controlling device. If the relay apparatus is connected to an output apparatus via the first signal transmitting device and is connected to a first unit via the second signal transmitting device, the first obtaining device obtains first information about the first unit; a second obtaining device obtains second information about a second unit connected to the output apparatus; a generating device generates third information that allows selection and operation of each of first and second units, on the basis of first and second information, and transmits the third information to the output apparatus; and a controlling device controls the first unit according to a command signal outputted from the output apparatus.

## Description

### Technical Field

The present invention relates to a relay apparatus which is disposed between a display apparatus such as, for example, a liquid crystal display and, for example, a reproducing apparatus or a recording apparatus, and which is configured to relay a digital signal associated with, for example, video, audio, or the like.

### Background Art

As this type of apparatus, there is proposed an apparatus configured to transmit, for example, to a unit compliant with a high-definition multimedia interface (HDMI) standard and having a HDMI terminal which allows connection of a HDMI cable thereto, a control command conforming to consumer electronics control (CEC) of the HDMI standard via the HDMI terminal, thereby performing change control of a switch configured to switch between the HDMI terminal of the unit and a terminal noncompliant with the HDMI standard (refer to Patent literature 1).

### Citation List

### Patent Literature

Patent Literature 1: Japanese Patent Application Laid Open No. 2011-217126

### Summary of Invention

### Technical Problem

According to the background described above, however, for example, if the unit noncompliant with the HDMI standard is connected to the relay apparatus or the like, the display apparatus cannot directly recognize the unit noncompliant with the HDMI standard. Then, a user cannot select and operate the unit noncompliant with the HDMI standard from the display apparatus if the unit noncompliant with the HDMI standard is connected to a unit different from the display apparatus such as, for example, the relay apparatus, which is technically problematic.

In view of the aforementioned problem, it is therefore an object of the present invention to provide a relay apparatus configured to directly operate, from the display apparatus, the unit noncompliant with the HDMI standard which is connected to the relay apparatus.

### Solution to Problem

The above object of the present invention can be achieved by a relay apparatus is provided with a first signal transmitting device compliant with one standard, and a second signal transmitting device compliant with another standard different from the one standard, wherein said relay apparatus is provided with: a first obtaining device configured to obtain first information which is information about the connected first unit if said relay apparatus is connected to an output apparatus via the first signal transmitting device and is connected to a first unit which is a unit compliant with the another standard via the second signal transmitting device; a second obtaining device configured to obtain second information which is information about a second unit which is a unit compliant with the one standard and which is connected to the output apparatus if said relay apparatus is connected to the output apparatus via the first signal transmitting device and is connected to the first unit via the second signal transmitting device; a generating device configured to generate third information which is information that allows selection and operation of each of the connected first unit and the connected second unit, on the basis of the obtained first information and the obtained second information, and to transmit the third information to the output apparatus if said relay apparatus is connected to the output apparatus via the first signal transmitting device and is connected to the first unit via the second signal transmitting device; and a controlling device configured to control the connected first unit according to a command signal for the connected first unit which is outputted from the output apparatus if said relay apparatus is connected to the output apparatus via the first signal transmitting device and is connected to the first unit via the second signal transmitting device.

The operation and other advantages of the present invention will become more apparent from an embodiment explained below.

### Brief Description of Drawings

[FIG. 1] FIG. 1 is a conceptual diagram illustrating an entire configuration of a system in an example.
[FIG. 2] FIG. 2 is a block diagram illustrating a configuration of a relay apparatus in the example.
[FIG. 3] FIG. 3 is a conceptual diagram illustrating a concept of a remote user interface in the example.
[FIG. 4] FIG. 4 is a flowchart illustrating a remote user interface generation process in the example.
[FIG. 5] FIG. 5 is a diagram illustrating one example of a menu screen displayed on a television in the example.

### Description of Embodiments

An embodiment of the relay apparatus of the present invention will be explained.

The relay apparatus in the embodiment is a relay apparatus is provided with a first signal transmitting device compliant with one standard, and a second signal transmitting device compliant with another standard different from the one standard, wherein said relay apparatus is provided with: a first obtaining device configured to obtain first information which is information about the connected first unit if said relay apparatus is connected to an output apparatus via the first signal transmitting device and is connected to a first unit which is a unit compliant with the another standard via the second signal transmitting device; a second obtaining device configured to obtain second information which is information about a second unit which is a unit compliant with the one standard and which is connected to the output apparatus if said relay apparatus is connected to the output apparatus via the first signal transmitting device and is connected to the first unit via the second signal transmitting device; a generating device configured to generate third information which is information that allows selection and operation of each of the connected first unit and the connected second unit, on the basis of the obtained first information and the obtained second information, and to transmit the third information to the output apparatus if said relay apparatus is connected to the output apparatus via the first signal transmitting device and is connected to the first unit via the second signal transmitting device; and a controlling device configured to control the connected first unit according to a command signal for the connected first unit which is outputted from the output apparatus if said relay apparatus is connected to the output apparatus via the first signal transmitting device and is connected to the first unit via the second signal transmitting device.

The relay apparatus in the embodiment is provided with the first signal transmitting device compliant with the one standard such as, for example, the HDMI standard, and the second signal transmitting device compliant with the another standard different from the one standard such as, for example, a mobile high-definition link (MHL) standard.

It is assumed that the relay apparatus is connected to the output apparatus such as, for example, a liquid crystal display via the first signal transmitting device and is connected to the first unit which is the unit compliant with the another standard such as, for example, a reproducing apparatus and a mobile phone via the second signal transmitting device. It is sufficient if the "output apparatus" can output video and music. The output apparatus may be, for example, a projector or the like.

The first obtaining device, which is provided, for example, with a memory, a processor, and the like, obtains the first information which is the information about the first unit connected to the relay apparatus. The "first information" includes, for example, a unit type, a model number, an identification number, an available function or the like associated with the first unit.

On the other hand, the second obtaining device, which is provided, for example, with a memory, a processor, and the like, obtains from the output apparatus the second information which is the information about the second unit which is the unit compliant with the one standard such as, for example, a reproducing apparatus and a recording apparatus and which is connected to the output apparatus. The "second information" includes, for example, a unit type, a model number, an identification number, an available function or the like associated with the second unit.

The "second unit which is connected to the output apparatus" may include not only a second unit directly connected to the output apparatus but also a second unit directly connected to another second unit directly connected to the output apparatus. If there are a plurality of target units, each of the first obtaining device and the second obtaining device obtains respective one of the first information and the second information for each unit.

The generating device, which is provided, for example, with a memory, a processor, and the like, generates the third information which is the information that allows the selection and the operation of each of the connected first unit and the connected second unit, on the basis of the obtained first information and the obtained second information, and transmits the third information to the output apparatus.

Here, the third information is desirably described in a metalanguage and includes graphical user interface (GUI) data and a script program. By virtue of such a configuration, it is possible to make a data size of the third information relatively small, and to display an image which does not depend on a display capability of the output apparatus (e.g. image resolution, etc.).

The GUI data desirably includes data for hierarchically displaying, on the output apparatus, the unit connected to the output apparatus. The expression "hierarchically displaying" means a display which clarifies a connection relation between the units. The "script program" is a program associated with the processing of the first unit.

The controlling device, which is provided, for example, with a memory, a processor, and the like, controls the connected first unit according to the command signal for the connected first unit which is outputted from the output apparatus.

If the third information is loaded by the output apparatus, for example, there is displayed a menu screen which allows the selection and the operation of each of the second unit connected to the output apparatus, the relay apparatus, and the first unit connected to the relay apparatus. Therefore, a user can operate the first unit connected to the relay apparatus by using the menu screen displayed by the output apparatus.

As described above, according to the relay apparatus in the embodiment, when the output apparatus and the relay apparatus are connected in one standard, the first unit connected to the relay apparatus in another standard can be operated directly from the output apparatus.

### Examples

An example of the relay apparatus of the present invention will be explained with reference to the drawings.

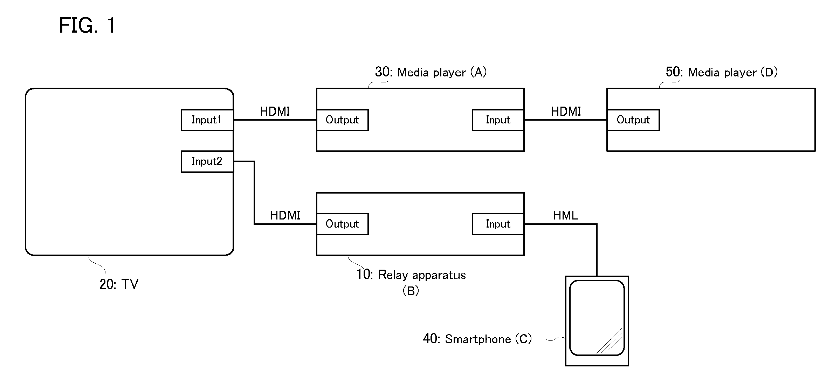

In the example, as illustrated in FIG. 1, a media player 30 is connected to a first input terminal (Input 1) of a television 20 via a HDMI cable. Moreover, a relay apparatus 10 is connected to a second input terminal (Input 2) of the television 20 via a HDMI cable. A media player 50 is connected to an input terminal of the media player 30 via a HDMI cable. A smartphone 40 is connected to an input terminal of the relay apparatus 10 via a MHL cable.

Here, it is assumed that at least the relay apparatus 10 and the television 20 have a HDMI Ethernet channel (HEC) function. It is also assumed that at least the relay apparatus 10 and the television 20 are connected to each other via the HDMI cables compliant with HEC.

If the relay apparatus 10 and the television 20 are connected to each other by an IP-based communication device such as, for example, a wired LAN and a wireless fidelity (WiFi), the relay apparatus 10 and the television 20 may not have the HEC function. The relay apparatus 10 may not only have a function as the relay apparatus but also have, for example, a function as a media player. The connection between the units illustrated in FIG. 1 is not limited to the configuration in FIG. 1.

The "television 20", the "smartphone 40", the "HDMI" and the "MHL" in the example are one example of the "output apparatus", the "first unit", the "one standard" and the "another standard" of the present invention, respectively. The "media player 30" and the "media player 50" in the example are one example of the "second unit" of the present invention.

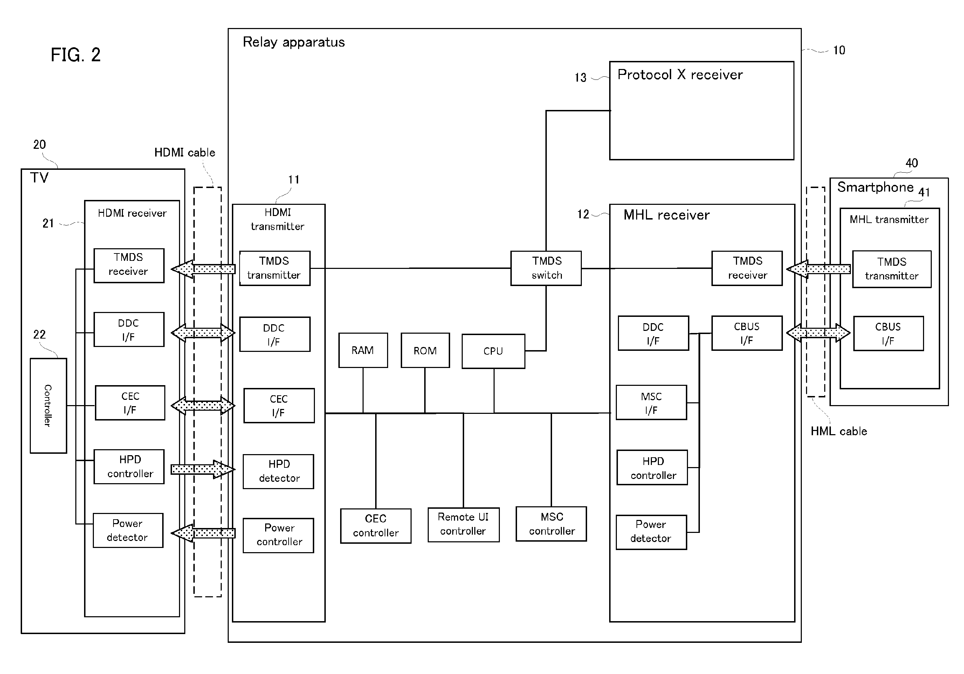

Next, a configuration of the relay apparatus 10 will be explained with reference to FIG. 2. FIG. 2 is a block diagram illustrating the configuration of the relay apparatus in the example.

In FIG. 2, the relay apparatus 10 is provided with a HDMI transmitter 11, a MHL receiver 12, and a Protocol X receiver 13. If they are connected as illustrated in FIG. 1, the HDMI transmitter 11 of the relay apparatus 10 and a HDMI receiver 21 of the television 20 (corresponding to "Input 2" in FIG. 1) are connected to each other by the HDMI cable. The MHL receiver 12 of the relay apparatus 10 and a MHL transmitter 41 of the smartphone 40 are connected to each other by the MHL cable.

The "HDMI transmitter 11" in the example is one example of the "first signal transmitting device" of the present invention. The "MHL receiver 12" and the "Protocol X receiver 13" in the example are one example of the "second signal transmitting device" of the present invention.

The relay apparatus 10 obtains information about the smartphone 40 (corresponding to the "first information" of the present invention) via the MHL receiver 12, and stores the obtained information, for example, in a RAM or the like. The relay apparatus 10 obtains information about the television 20 (corresponding to the "second information" of the present invention) such as, for example, entire input terminal information about the television 20 and information about an operating device of the unit connected to each input terminal, via the HDML transmitter 11, and stores the obtained information, for example, in the RAM or the like.

The information about the television 20 includes information about the unit (herein the "media player 50") connected via the HDMI cable to the media player 30 which is directly connected to the television 20 via the HDMI cable, but does not include information about a unit connected to the media player 30 via a cable of a standard other than the HDMI standard.

The relay apparatus 10 firstly lists the units on a network formed by being connected to each other by the HDMI cables (which are herein the "relay apparatus", the "television 20", the "media player 30" and the "media player 50") and the unit connected to the relay apparatus 10 (which is herein the "smartphone 40"), on the basis of the obtained information about the smartphone 40 and the obtained information about the television 20. Then, the relay apparatus 10 generates a processing program which allows various functions associated with the listed units (e.g. "replay", "stop", "record", "fast-forward", etc.) to be operated on the television 20, and generates GUI data.

Specifically, the relay apparatus 10 generates a "remote user interface (Remote UI)", which is a user interface provided with GUI components including layout information during display on a screen of the television 20 (i.e. GUI data), and a handler program linked to the GUI components. The "remote user interface" in the example is one example of the "third information" of the present invention.

The GUI components are described in a metalanguage such as, for example, XML. Moreover, the handler program is described in a script language such as, for example, Java Script (registered trademark).

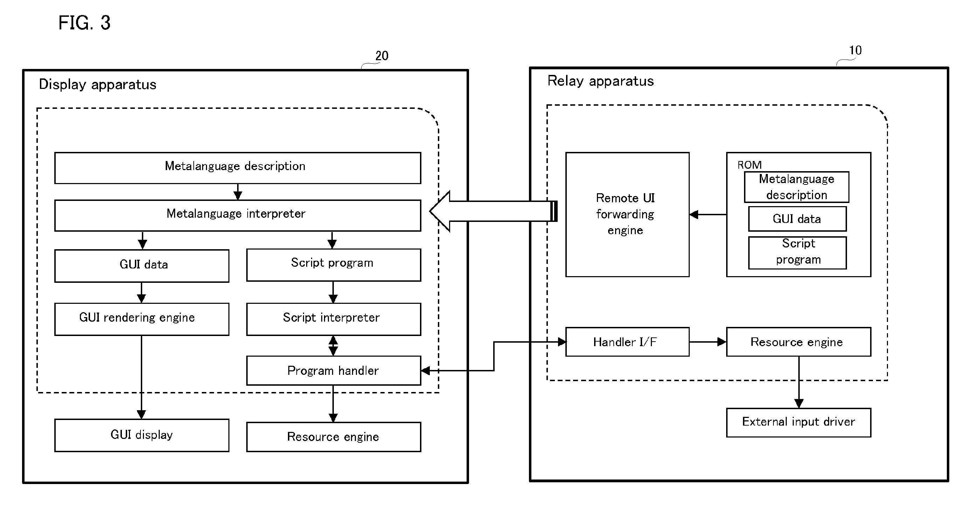

The relay apparatus 10 then transmits the remote user interface to the television 20 by using, for example, the HEC function of the HDMI cable (refer to FIG. 3). Incidentally, it is assumed that a metalanguage or script language interpreter is mounted on the television 20 in advance (refer to FIG. 3). The "forwarding engine" of the relay apparatus 10 in FIG. 3 is provided with a "CPU", a "RAM" and the like of the relay apparatus 10 in FIG. 1.

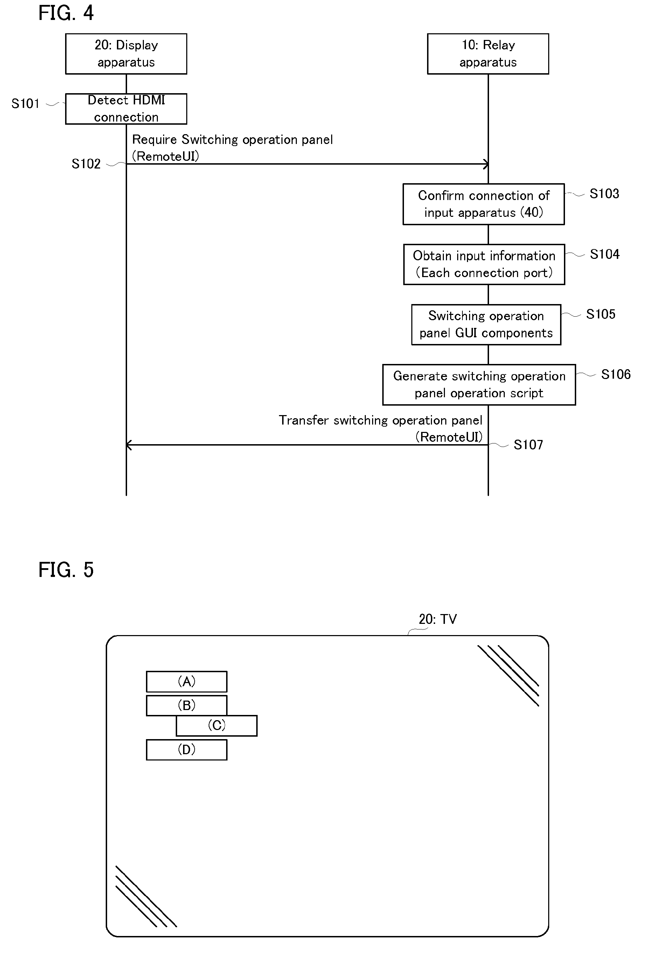

Next, a remote user interface generation process in the example will be explained with reference to a flowchart in FIG. 4.

In FIG. 4, firstly, the television (or display apparatus) 20 detects the unit connected to the television 20 via the HDMI cable (step S101). The television 20 then requires the remote user interface for operating the unit connected to the television 20, of the relay apparatus 10 (step S102).

The relay apparatus 10 confirms connection of the unit (or the "smartphone 40" herein) connected to the relay apparatus 10 in a standard different from the HDMI standard such as, for example, the MHL standard (step S103). The relay apparatus 10 then obtains the entire input terminal information about the television 20, the information about the operating device of the unit connected to each input terminal and the like (step S104).

The relay apparatus 10 then generates the GUI components associated with the remote user interface, on the basis of the information about the smartphone 40 and the information about the television 20 (step S105), and generates a script program corresponding to the generated GUI components (step S106). The relay apparatus 10 then transmits the remote user interface to the television 20 (step S107).

The television 20 displays a menu screen which can be operated by a user, on the screen of the television 20 on the basis of the transmitted user interface (refer to FIG. 5). FIG. 5 is a diagram illustrating one example of the menu screen displayed on the television in the example. Incidentally, "(A)", "(B)", "(C)" and "(D)" in FIG. 5 correspond to "(A)", "(B)", "(C)" and "(D)" in FIG. 1, respectively.

As illustrated in FIG. 5, the unit connected in the standard other than the HDMI standard (or (C) herein) may be hierarchically displayed such that the user can recognize the unit (or (B) herein) to which the unit connected in the standard other than the HDMI standard is connected.

By the way, as one of methods which allows the operation of a unit noncompliant with CEC such as, for example, a unit compliant with the MHL standard (hereinafter referred to as a "MHL unit" from the television 20, there can be considered a method of virtualizing the MHL unit as a unit compliant with CEC and proxying a CEC command. In the method, however, if a unit compliant with a standard different from the MHL standard (e.g. "Display Port", "Thunderbolt", etc.) is added, it is necessary to prepare a proxy for each standard at each time of development, which is technically problematic.

On the other hand, as in the example, in the method in which the relay apparatus 10 provides the television 20 with the remote user interface, there is no need to prepare the individual CEC proxy. In addition, in comparison with the case where the MHL unit is virtualized as the unit compliant with CEC, it is possible to provide the user with a more convenient function.

The present invention is not limited to the aforementioned embodiment and example, but various changes may be made, if desired, without departing from the essence or spirit of the invention which can be read from the claims and the entire specification. A relay apparatus which involves such changes is also intended to be within the technical scope of the present invention.

### Description of Reference Numerals

- 10: relay apparatus
- 11: HDMI transmitter
- 12: MHL receiver
- 13: Protocol X receiver
- 20: television
- 21: HDMI receiver
- 30, 50: media player
- 40: smartphone
- 41: MHL transmitter

## Claims

1. A relay apparatus comprising a first signal transmitting device compliant with one standard, and a second signal transmitting device compliant with another standard different from the one standard, wherein
said relay apparatus comprises:
a first obtaining device configured to obtain first information which is information about the connected first unit if said relay apparatus is connected to an output apparatus via the first signal transmitting device and is connected to a first unit which is a unit compliant with the another standard via the second signal transmitting device;
a second obtaining device configured to obtain second information which is information about a second unit which is a unit compliant with the one standard and which is connected to the output apparatus if said relay apparatus is connected to the output apparatus via the first signal transmitting device and is connected to the first unit via the second signal transmitting device;
a generating device configured to generate third information which is information that allows selection and operation of each of the connected first unit and the connected second unit, on the basis of the obtained first information and the obtained second information, and to transmit the third information to the output apparatus if said relay apparatus is connected to the output apparatus via the first signal transmitting device and is connected to the first unit via the second signal transmitting device; and
a controlling device configured to control the connected first unit according to a command signal for the connected first unit which is outputted from the output apparatus if said relay apparatus is connected to the output apparatus via the first signal transmitting device and is connected to the first unit via the second signal transmitting device.

2. The relay apparatus according to claim 1, wherein the third information is described in a metalanguage and includes graphical user interface (GUI) data and a script program.

3. The relay apparatus according to claim 2, wherein the GUI data includes data for hierarchically displaying, on the output apparatus, the unit connected to the output apparatus.
